# EUROPÄISCHE PATENTSCHRIFT

(11) **EP 0 821 461 B1**
(45) Veröffentlichungstag und Bekanntmachung des Hinweises auf die Patenterteilung: **20.06.2001**
(21) Anmeldenummer: 97111573.8
(22) Anmeldetag: 09.07.1997
(51) Int. Cl.: H02J 13/00

(54) **Verfahren zur Steuerung elektrischer Lasten**
Method for controlling electrical loads
Procédé de commande des charges électriques

(30) Priorität: 26.07.1996 CH 186796
(43) Veröffentlichungstag der Anmeldung: 28.01.1998
(73) Patentinhaber: Siemens Metering AG, 6300 Zug (CH)
(72) Erfinder: Bösiger, Hanspeter, 6312 Steinhausen (CH)

(56) Entgegenhaltungen:
- W.L. KIDD: "Developement, design and use of ripple control" PROCEEDINGS OF THE INSTITUTION OF ELECTRICAL ENGINEERS, Bd. 122, Nr. 10R, Oktober 1975, STEVENAGE GB, Seiten 993-1008, XP002022925
- THIERRY BAZIN: "La nouvelle télécommande centralisée d'EDF" REVUE GENERALE DE L'ELECTRICITE, Nr. 6, Juni 1987, PARIS FR, Seiten 43-53, XP002022926

## Beschreibung

Die Erfindung bezieht sich auf ein Verfahren zur Steuerung elektrischer Lasten gemäss dem Oberbegriff des Anspruchs 1.

Das Verfahren wird vorzugsweise in der Rundsteuerung verwendet. Die elektrischen Lasten sind bevorzugt die Lampen einer öffentlichen Strassenbeleuchtung einer Stadt oder Ortschaft, wobei zwischen einem Ganznacht (GN)- und einem Halbnacht (HN)-Betrieb der Strassenbeleuchtung unterschieden wird. Die gewünschte Brennzeit der Strassenbeleuchtung ändert sich in der Regel von Tag zu Tag je nach Wetter und Sonnen-Aufgangszeit bzw. -Untergangszeit.

Derartige Verfahren sind beispielsweise bekannt aus dem Artikel "La nouvelle télécommande centralisée d'EDF", Revue Généralede L'Electricité, Nr. 6, Juni 1987, Paris, FR, Seiten 43-53 von Thierry Bazin. Hierin wird beschrieben, dass die Bedürfnisse der Elektrizitätsverteiler bei EdF zur Entwicklung von neuen Rundsteuerempfängern geführt haben. Elektrotechnische und ökonomische Überlegungen haben zu einem Rundsteuersystem geführt, welches analog jenem mit der Frequenz von 175 ist, aber bei 188 Hz funktioniert. Der beschriebene Empfänger kann auch mit Gruppierungen und Adressen arbeiten. Diese Evolution ist dank des Ersatzes der elektromechanischen Empfänger durch elektronische möglich und durch neue Software in der Zentrale.

Bekannt ist, die öffentliche Strassenbeleuchtung mittels Rundsteuerung ein- und auszuschalten. Dabei wird in einer Rundsteuer-Zentrale mittels einer Uhr und/oder eines Dämmerungsschalters ein spezielles Rundsteuer-Telegramm ausgelöst, welches mittels mindestens eines Rundsteuer-Senders über ein elektrisches Energieversorgungsnetz zu Rundsteuer-Empfängern übertragen wird, welche an das Energieversorgungsnetz angeschlossen und im Versorgungsgebiet eines Elektrizitäts-Versorgungsunternehmens räumlich verteilt angeordnet sind. Ein Rundsteuer-Telegramm besteht in der Regel aus einer Adresse und mindestens einem zeitlich nachfolgenden Ausführungs-Kommando. Die Ausführungs-Kommandos sind Einzel-, Doppel- oder Decabit-Kommandos. Die letzteren bestehen aus einem 10 Bit-Codewort. Die Doppel-Kommandos bestehen z. B. aus zwei zeitlich aufeinanderfolgenden Bits des Rundsteuer-Telegramms, wobei eines der beiden Bits des Doppelkommandos jeweils entweder einen Einschalt-Befehl "EIN" oder einen Ausschalt-Befehl "AUS" beinhaltet.

Es besteht seitens der Elektrizitäts-Versorgungsunternehmen die Vorschrift, dass die Strassenbeleuchtung auch bei einem Ausfall der Rundsteuer-Übertragung, z. B. durch einen Defekt der Sendeanlage, durch Servicearbeiten oder durch zeitweise nicht erreichbare Teile des Energieversorgungsnetzes, selbständig und mindestens annähernd zur astronomisch richtigen Zeit ein- bzw. auszuschalten ist. Auch muss, z. B. zu Testzwecken, tagsüber die Strassenbeleuchtung mittels einer Sendung eines Rundsteuer-Telegramms ein- und ausgeschaltet werden können, z. B. zwecks Ermittlung defekter Strassenlampen.

Der Erfindung liegt die Aufgabe zugrunde, ein Verfahren der eingangs genannten Art zu verwirklichen, welches es den Rundsteuer-Empfängern gestattet, spezielle elektrische Lasten wie z. B. die Lampen einer Strassenbeleuchtung auch bei einem Ausfall der Rundsteuer-Übertragung mindestens annähernd zum richtigen Zeitpunkt zu steuern unter gleichzeitiger Beibehaltung der Möglichkeit, die gleiche Steuerung, z. B. zu Testzwecken, ausführen zu können mittels eines empfangenen normalen und bekannten Rundsteuer-Telegramms. Ein weiterer Vorteil ist, dass, bei einem mehrfachen Senden desselben Ausführungs-Kommandos innerhalb von 24 h, gesteuert werden kann, welches dieser gleichen Ausführungs-Kommandos wiederholt werden soll, und welches nicht. Ein Benutzer des erfindungsgemässen Verfahrens kann somit frei entscheiden, welches dieser gleichen Ausführungs-Kommandos wiederholt werden soll und welches nicht.

Die genannte Aufgabe wird erfindungsgemäss durch die im Kennzeichen des Anspruchs 1 angegebenen Merkmale gelöst. Vorteilhafte Ausgestaltungen der Erfindung ergeben sich aus den abhängigen Ansprüchen.

Ein Ausführungsbeispiel der Erfindung ist in der Zeichnung dargestellt und wird im folgenden näher beschrieben.

Es zeigen:
- Fig. 1: eine symbolische Darstellung der Wirkungsweise eines erfindungsgemässen Verfahrens bei einem Empfang eines ersten Rundsteuer-Telegramms zwecks Ganznacht- und Halbnacht-Einschaltung einer Strassenbeleuchtung,
- Fig. 2: ein Schalt-Zeitprogramm eines Ganznacht-Betriebs der Strassenbeleuchtung,
- Fig. 3: ein Schalt-Zeitprogramm eines Halbnacht-Betriebs der Strassenbeleuchtung,
- Fig. 4: eine symbolische Darstellung der Wirkungsweise eines zweiten Rundsteuer-Telegramms zwecks Ausschaltung einer HN-Strassenbeleuchtung während einer Nacht,
- Fig. 5: eine symbolische Darstellung der Wirkungsweise eines dritten Rundsteuer-Telegramms zwecks Wiedereinschaltung der HN-Strassenbeleuchtung während der Nacht,
- Fig. 6: eine symbolische Darstellung der Wirkungsweise des erfindungsgemässen Verfahrens bei einem Empfang eines vierten Rundsteuer-Telegramms zwecks Ganznacht- und Halbnacht-Ausschaltung der Strassenbeleuchtung und
- Fig. 7: eine symbolische Darstellung der Wirkungsweise des erfindungsgemässen Verfahrens bei einem Ausfall einer nachfolgenden Übertragung des ersten Rundsteuer-Telegramms.

Im bekannten Rundsteuer-Verfahren zur Steuerung elektrischer Lasten enthält ein zu den Rundsteuer-Empfängern gesandtes Rundsteuer-Telegramm, wie bereis erwähnt, mindestens ein Ausführungs-Kommando. Dieses ist auf ein zugehöriges Ausgangsrelais der Rundsteuer-Empfänger wirksam. Das Ausgangsrelais wirkt seinerseits auf eine zugehörige zu steuernde elektrische Last zwecks Ausführung einer vorgegebenen Funktion. Die letztere ist vorzugsweise ein Ein- und Ausschalten der zu steuernden elektrischen Lasten. Die letzteren sind bevorzugt die Lampen einer öffentlichen Strassenbeleuchtung.

Im erfindungsgemässen Verfahren ist im Rundsteuer-Telegramm noch ein zum Ausführungs-Kommando gehörendes weiteres Kommando vorhanden, bei dessen Empfang im Rundsteuer-Empfänger eine Ausführungs-Uhrzeit gespeichert wird, die eine Funktion der momentanen Uhrzeit zum Zeitpunkt des Empfangs des betreffenden Rundsteuer-Telegramms ist. In den Rundsteuer-Empfängern ist in der Regel jeweils ein mit einem Speicher versehener Mikrocomputer vorhanden. Die Ausführungs-Uhrzeit wird dann bevorzugt in einer mittels eines Interpreter-Programms gewählten Zeile dieses Speichers gespeichert. Bei einem zukünftigen Erreichen der gespeicherten Ausführungs-Uhrzeit, z. B. nach zirka 24 h, wird die zum Ausführungs-Kommando gehörende Funktion erneut ausgeführt, falls inzwischen nicht zu einer anderen Uhrzeit erneut das weitere Kommando mit dem betreffenden Ausführungs-Kommando empfangen wurde. Die gespeicherte Ausführungs-Uhrzeit ist vorzugsweise die mit einem positiven oder negativen Versatz versehene momentane Uhrzeit, wobei der Versatz auch einen Wert Null besitzen kann. Im letzteren Fall ist die gespeicherte Ausführungs-Uhrzeit die momentane Uhrzeit. Die beim Erreichen der gespeicherten Ausführungs-Uhrzeit auszuführende Funktion ist sperrbar durch Sendung eines weiteren Rundsteuer-Telegramms, welches ein entsprechendes Sperr-Kommando enthält.

Die Kommandos, also sowohl die Ausführungs-Kommandos, das Sperr-Kommando als auch das weitere Kommando, sind Einzelkommandos, Doppelkommandos oder Decabit-Kommandos. Die lezteren bestehen, wie bereits erwähnt, aus zwei zeitlich aufeinanderfolgenden Bits des Rundsteuer-Telegramms, wobei eines der beiden Bits des Doppelkommandos jeweils entweder einen Einschalt-Befehl "EIN" oder einen Ausschalt-Befehl "AUS" beinhaltet. Ein Doppelkommando besitzt somit in der Regel einen Wert "10" oder einen Wert "01". Einer dieser beiden Werte bedeutet dann "EIN" und der andere "AUS". Ein Ausführungs-Doppelkommando beinhaltet somit jeweils einen Einschalt-Befehl "EIN" bzw. einen Ausschalt-Befehl "AUS" für das zum Ausführungs-Doppelkommando gehörende Ausgangsrelais.

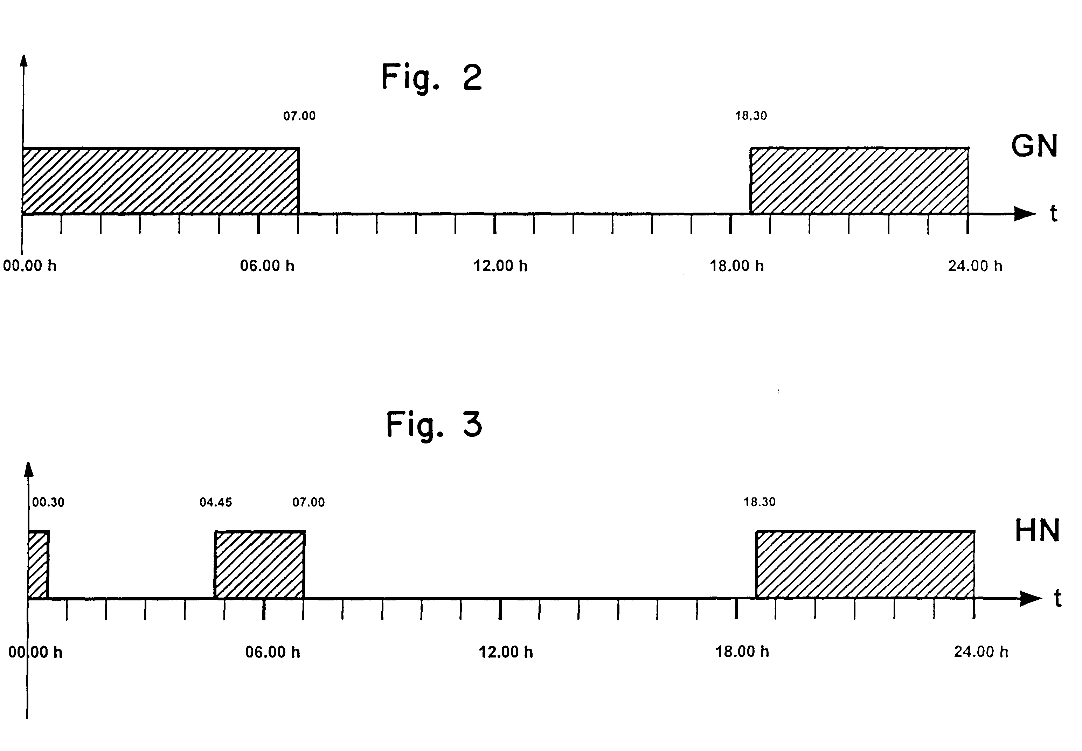

Nachfolgend gelten die Annahmen, dass
- die Kommandos Doppelkommandos sind,
- die auszuführende Funktion ein Ein- oder Ausschalten ist,
- die elektrischen Lasten die Lampen einer Strassenbeleuchtung sind,
- die Adresse aus 10 Bits besteht, die ein binäres Codewort bilden und anstelle von fünf ersten Doppelkommandos im Rundsteuer-Telegramm vorhanden sind,
- die Rundsteuer-Empfänger zwei Ausgangsrelais K1 und K2 besitzen,
- das Ausgangsrelais K1 von einem Ausführungs-Doppelkommando DK8 gesteuert wird und eine erste Gruppe G1 von Strassenlampen steuert, die im Ganznacht-Betrieb GN gemäss dem in der Fig. 2 dargestellten Schalt-Zeitprogramm betrieben werden,
- das Ausgangsrelais K2 von einem Ausführungs-Doppelkommando DK9 gesteuert wird und eine zweite Gruppe G2 von Strassenlampen steuert, die im Halbnacht-Betrieb HN gemäss dem in der Fig. 3 dargestellten Schalt-Zeitprogramm betrieben werden, und
- das weitere Kommando ein Doppelkommando DK10 ist.

Das Ausführungs-Doppelkommando DK8 besteht aus dem fünfzehnten und sechszehnten Bit, das Ausführungs-Doppelkommando DK 9 aus dem siebzehnten und achtzehnten Bit und das weitere Doppelkommando DK10 aus dem neunzehnten und zwanzigsten Bit jeweils des Rundsteuer-Telegramms. Das Sperr-Kommando ist ein beliebiges der verbleibenden anderen Doppelkommandos des Rundsteuer-Telegramms.

Die Lampen beider Gruppen G1 und G2 werden jeweils am Abend von der Rundsteuer-Zentrale her mittels eines Dämmerungsschalters, z. B. um 18,30 h, ein- und am nächsten Morgen, z. B. um 7,00 h, mittels des Dämmerungsschalters wieder ausgeschaltet (siehe Fig. 2 und Fig. 3). Die Lampen der Gruppe G2 werden nach ihrem abendlichen Einschalten zusätzlich noch am späten Abend - meist zu einer festen Zeit, z. B. um 00,30 h - wieder aus- und dann am nächsten Morgen sehr früh in der Regel ebenfalls zu einer festen Zeit, z. B. um 4,45 h - wieder eingeschaltet, um schliesslich später am Morgen, wie bereits erwähnt, um 7,00 h mittels des Dämmerungsschalters definitiv wieder ausgeschaltet zu werden (siehe Fig. 3). Der Dämmerungsschalter beeinflusst somit im Halbnacht-Betrieb nur die erste Ein- und die letzte Ausschaltung der Strassenbeleuchtung, jedoch nicht die dazwischen liegenden weiteren Ein- und Ausschaltungen. Die letzteren werden, da zu einer festgesetzten Zeit stattfindend, von einer Uhr in der Rundsteuer-Zentrale mittels eines im richtigen Zeitpunkt ausgelösten Rundsteuer-Telegramms ausgelöst.

Im erfindungsgemässen Verfahren steuert das weitere Doppelkommando DK10 eine Zeitmemorisierung: Mit dem Empfang des Doppelkommandos DK10 erhalten alle adressierten Rundsteuer-Empfänger den Auftrag, den empfangenen aktuellen Befehl, d. h. die aktuellen Werte des Ausführungs-Doppelkommandos DK8 und/oder DK9, mitsamt der Ausführungs-Uhrzeit, die eine Funktion der momentanen Uhrzeit beim Empfang des Rundsteuer-Telegramms ist, in eine Zeile des zum Mikrocomputer gehörenden Speichers zu speichern, welche Zeile nachfolgend Memozeile genannt wird. Der Speicher ist z. B. ein EEPROM ("electrically erasable programmable read only memory"), also ein elektrisch löschbarer programmierbarer Festwertspeicher. Mit dem Empfang des Doppelkommandos DK10 ist keine Schaltung des Ausgangsrelais K1 oder K2 des Rundsteuer-Empfängers verknüpft. Bei Testsendungen wird das Doppelkommando DK10 nicht übertragen.

Im Speicher des in den Rundsteuer-Empfängern enthaltenen Mikrocomputers sind üblicherweise fortlaufend durchnumerierte Zeitzeilen vorhanden, in denen Schaltzeiten abgespeichert sind, die durch eine Fernparametrierung änderbar sind oder sich selten oder nie ändern, wie z. B. diejenigen eines Notprogramms. Für die Durchführung des erfindungsgemässen Verfahrens enthält der Speicher, ebenfalls fortlaufend durchnumeriert, Memozeilen, die im Speicher z. B. alle vor den Zeitzeilen liegen. Eine Memozeilen-Nummer gibt dann den Platz der Memozeile in der Reihefolge an. In den Memozeilen sind Schaltzeiten gespeichert, die sich fortlaufend ändern, wie z. B. diejengen einer mittels eines Dämmerungsschalters gesteuerten Strassenbeleuchtung. Die Memozeilen werden vom Mikrocomputer gleich behandelt wie die Zeitzeilen, d. h. sie werden bei jedem Uhren-Minutensprung abgearbeitet und nach jedem Spannungsausfall nachgeholt. Die Memozeilen sind nur in den Rundsteuer-Empfängern vorhanden.

Die Ausführungs-Doppelkomandos DK8 und DK9 rufen bei ihrem Empfang jeweils im adressierten Rundsteuer-Empfänger ein zugehöriges Interpreter-Programm auf, in welchem festgelegt ist, welches der beiden Bits des betreffenden Doppekommandos einem Einschalt- und welches einem Ausschalt-Befehl entspricht. Auch das weitere Doppelkommando DK10 ruft ein eigenes Interpreter-Programm auf. In diesem ist ein Interpreter-Befehl
"Remember time[Memozeilen-Nummer, Versatz]" enthalten, wobei der Versatz z. B. in Minuten angegeben ist. Der Versatz besitzt z. B. die Grösse eines Bytes in 2er Komplement-Darstellung und weist dann einen Wertebereich auf von -128 bis +127. Ein Versatzwert Null bedeutet, dass kein Versatz vorhanden ist. Der Interpreter-Befehl veranlasst, dass eine Ausführungs-Uhrzeit, die vorzugsweise gleich der algebraischen Summe des Versatzes und der momentanen Uhrzeit beim Empfang des Rundsteuer-Telegramms ist, in eine Memozeile gespeichert wird, die die angegebene Memozeilen-Nummer als Nummer aufweist. Wenn das Rundsteuer-Telegramm, welches das Doppelkommando DK10 enthält, z. B. zum Zeitpunkt 18.30 h empfangen wird, veranlasst z. B. ein zum DK10 im betreffenden Interpreter-Programm gehörender Interpreter-Befehl "Remember time[1, 20], dass eine Uhrzeit 18.30 h + 0.20 h = 18.50 h in die Memozeile Nr. 1 gespeichert wird. Die Rundsteuer-Empfänger besitzen so erfindungsgemäss jeweils eine mittels des weiteren Kommandos DK10 gesteuerte Gedächtnisfunktion. Der "Remember time"-Befehl kann auch in einem Interpreter-Programm zweimal nacheinander aufgerufen werden, z. B. für zwei Memozeilen, welche unterschiedliche Versatz-Werte berücksichtigen müssen. Auch kann ein gleicher "Remember time"-Befehl von zwei unterschiedlichen Kommandos aufgerufen werden.

Die Memozeile enthält ausser der berechneten Uhrzeit in der Regel noch andere Angaben. Sie besitzt vorzugsweise folgenden Inhalt:
- Index : z.B.01
- Ausführungs-Uhrzeit : Berechnet, wie oben beschrieben
- Teilprogramm-Nummer : z. B. 2
- Sperre : Verhindert, wenn gesetzt, einen Aufruf der Memozeile.
- Interpreter-Programm-Nummer : z. B. Programm 1 für GN- oder Programm 2 für HN-Betrieb
- "EIN/AUS" : Wert des zugehörigen Ausführungskommando DK8 bzw. DK9 (z. B. "10" = "EIN" und "01" = "AUS")
- Ausführungstage : z. B. nur Wochentage
- Datumsbereich : z. B. nur während der Sommerzeit

Die Programm-Nummer ist die Nummer desjenigen Interpreter-Programms, welches bei einer Übereinstimmung der Zeit und der anderen Memozeilen-Angaben aufgerufen werden soll. Diese Programm-Nummer muss nicht identisch sein mit der Nummer des Interpreter-Programms, welches den Befehl "Remember time [Memozeilen-Nummer, "Offset"-Wert]" enthält. Bei einer Erstinstallation wird vorzugsweise eine ungültige Uhrzeit, z. B. 26 h, in die Memozeile eingetragen, damit diese erst ab dem Zeitpunkt aktiv werden kann, an dem das erste Mal eine Ausführungs-Uhrzeit mittels eines ersten "Remember time"-Befehls eingetragen wird.

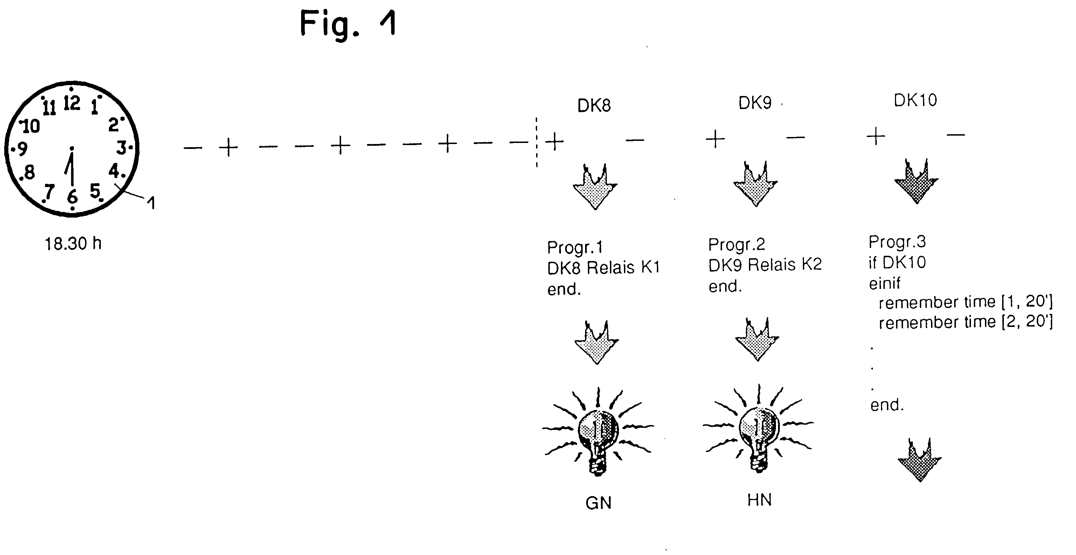

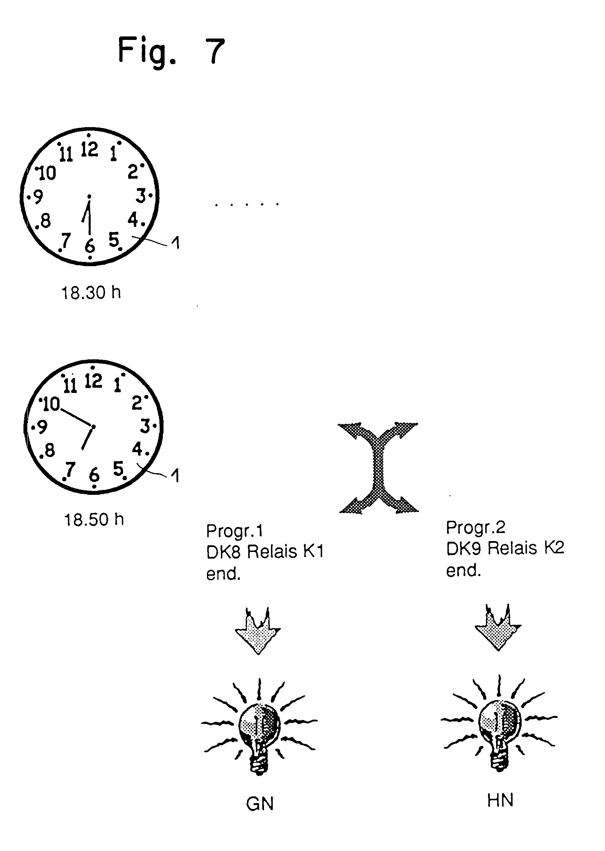

Die detaillierte Arbeitsweise des erfindungsgemässen Verfahrens wird nachfolgend anhand der Figuren 1 bis 7 beschrieben, wobei die Annahme gilt, dass zum Ausführungs-Doppelkommando DK 8 als Interpreter-Programm ein Programm 1, zum Ausführungs-Doppelkommando DK 9 als Interpreter-Programm ein Programm 2 und zum weiteren Doppelkommando DK10 als Interpreter-Programm ein Programm 3 vorhanden ist. In der Fig. 1 und der Fig. 4 bis Fig. 6 ist das Verfahren bei einem normalen Rundsteuerbetrieb und in der Fig. 7 bei einem Ausfall der Rundsteuerung symbolisch dargestellt. In der ersten Zeilen dieser Figuren sind rechts von einer Uhr 1 jeweils die Adresse (10 Bits) und die Doppelkommandos DK8 bis DK10 des empfangenen Rundsteuer-Telegramms wiedergegeben, wobei jeweils ein Logikwert Null durch ein Minus- und ein Logikwert Eins durch ein Plus-Zeichen dargestellt ist.

Gemäss Fig. 1 empfängt ein Rundsteuer-Empfänger um 18.30 h abends ein Rundsteuer-Telegramm, welches in der Rundsteuer-Zentrale durch einen Dämerungsschalter ausgelöst wurde. Die beiden Ausführungs-Doppelkommandos DK8 und DK9 besitzen je einen Wert "10", was bedeutet, dass sowohl die GN- als auch die HN-Strassenbeleuchtung einzuschalten ist (siehe Fig. 2 und Fig. 3). Das DK8 ruft als Interpreter-Programm das Programm 1 auf, welches veranlasst, dass das Ausgangsrelais K1 und damit die GN-Strassenbeleuchtung eingeschaltet werden. Das DK9 veranlasst auf gleiche Weise mit Hilfe des Programms 2 und des Ausgangsrelais K2, dass die HN-Strassenbeleuchtung eingeschaltet wird. Dies ist in der Fig. 1 durch leuchtende Lampen GN und HN symbolisch dargestellt. Das weitere Doppelkommando DK10, welches ebenfalls den Wert "10" besitzt, ruft als Interpreter-Programm das Programm 3 auf, welches z. B. folgenden Inhalt besitzt:

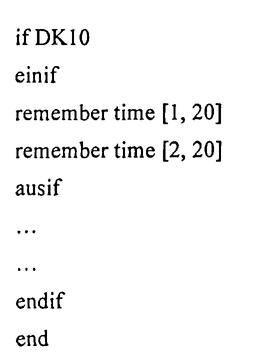

D.h.: Wenn das DK10 die Bedeutung "EIN" besitzt, d. h. gleich "10" ist, wird in die Memozeilen Nr. 1 und Nr. 2 die Summe 18.30 h + 0.20 h = 18.50 h als Ausführungs-Uhrzeit gespeichert. Diese Memozeilen enthalten dann unter anderem folgende Angaben:
- Memozeile Nr.1:: ...; 18.50 h; Programm 1, "EIN"; ...,
- Memozeile Nr.2:: ...; 18.50 h; Programm 2, "EIN"; ...,

was zur Folge hat, dass, wenn die Uhrzeit des Rundsteuer-Empfängers am nächsten Tag die Ausführungs-Uhrzeit 18.50 h erreicht, die Programme 1 und 2 wieder als Interpreter-Programme aufgerufen werden und damit der in den Ausführungs-Doppelkommandos DK8 und DK9 enthaltene Befehl "EIN" wiederholt. Um am gleichen Tag eine Bestätigung zu verhindern, welche nur bei positiven Versatz-Werten auftritt, wird bei der Eintragung der Ausführungs-Uhrzeit in die Memozeile dort auch die bereits obenerwähnte Sperre gesetzt, welche bei einer erstmaligen Koinzidenz der Uhrzeit mit der Ausführungs-Uhrzeit einen Aufruf des zugehörigen Interpreter-Programms verhindert, um anschliessend gelöscht zu werden, so dass 24 h später bei der nächsten Koinzidenz der Zeiten erwartungsgemäss der Aufruf des betreffenden Interpreter-Programms erfolgt, sofern die Memozeile inzwischen nicht wieder neu beschrieben wurde. Mit anderen Worten: Zur Verhinderung eines Aufrufs des Interpreter-Programms bei einer erstmaligen Koinzidenz der Uhrzeit mit der Ausführungs-Uhrzeit wird bei einer Eintragung der Ausführungs-Uhrzeit in die Zeile eines Speichers dort die Sperre gesetzt, welche nach der erstmaligen Koinzidenz gelöscht wird, so dass die Sperre dann für weitere Koinzidenzen ausser Betrieb ist.

Sollte jedoch am anderen Tag aus irgend einem Grund, z. B. weil die Rundsteuer-Anlage defekt ist, zur Dämmerungszeit gegen 18.30 h kein Rundsteuer-Telegramm empfangen werden (siehe Fig. 7, erste Zeile), erinnert sich der Rundsteuer-Empfänger (daher der Ausdruck "remember" im Programm 3), dass er beim Erreichen der Ausführungs-Uhrzeit 18.50 h den Befehl "EIN", der in den am Vortage empfangenen Ausführungs-Doppelkommandos DK8 und DK9 enthalten war, ausführen muss. Er schaltet somit um 20 Minuten leicht verspätet die GN- und HN-Strassenbeleuchtung ein, da diese wegen dem fehlenden Rundsteuer-Telegramm noch nicht eingeschaltet wurde (siehe unterer Teil der Fig. 7).

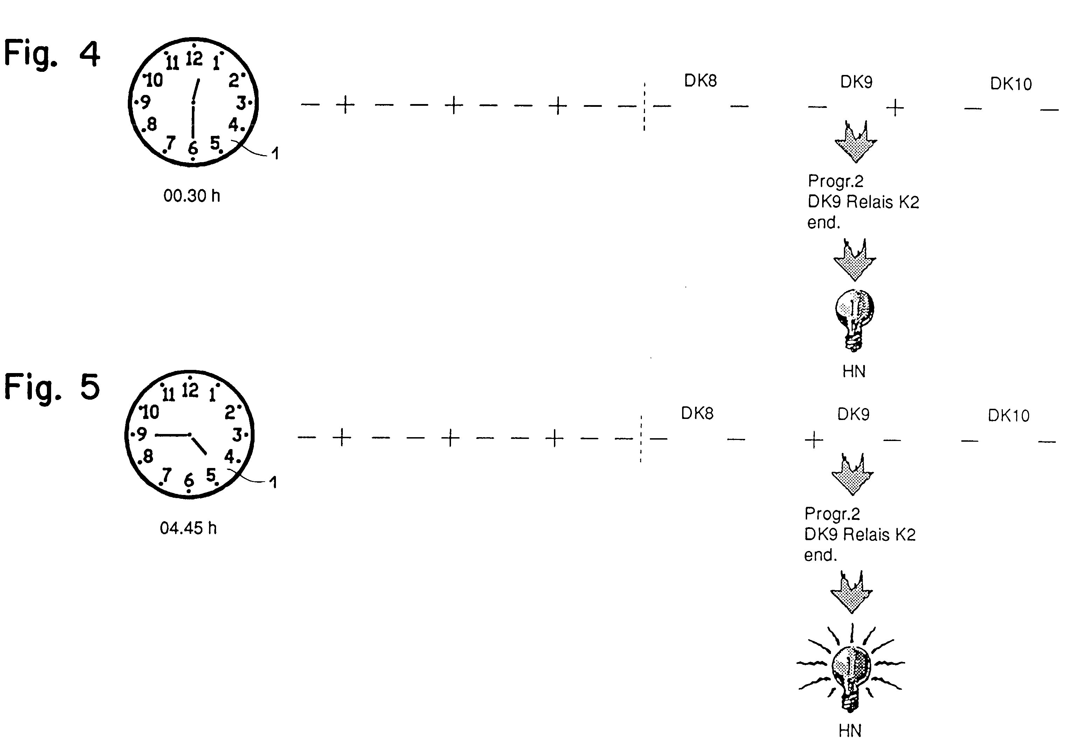

Gemäss Fig. 4 empfängt der Rundsteuerempfänger in der Nacht um 00.30 h ein Rundsteuer-Telegramm, welches in der Rundsteuer-Zentrale durch dessen Uhr 1 ausgelöst wurde. Das Ausführungs-Doppelkommando DK8 besitzt diesmal einen Wert "00", da die GN-Strassenbeleuchtung um 00.30 h nicht geändert werden muss (siehe Fig. 2). Das Ausführungs-Doppelkommando DK9 besitzt dagegen einen Wert "01", was bedeutet, dass die HN-Strassenbeleuchtung auszuschalten ist (siehe Fig. 3). Das DK9 ruft als Interpreter-Programm wieder das Programm 2 auf, welches veranlasst, dass das Ausgangsrelais K2 und damit die HN-Strassenbeleuchtung ausgeschaltet wird, was in der Fig. 4 symbolisch durch eine nichtleuchtende Lampe HN dargestellt ist. Das Doppelkommando DK10, welches ebenfalls den Wert "00" besitzt, veranlasst keinen Aufruf des Programms 3 und damit keine Speicherung eines Interpreter-Befehls "Remember [., .]", da 00.30 h keine von der Dämmerung und vom Wetter abhängige variable Zeit, sondern eine feste Zeit ist, die nicht in einer Memozeile, sondern auf herkömmliche Weise in einer Zeitzeile gespeichert ist. Bei Nichtempfang des Rundsteuer-Telgramms am nächsten Tag übernimmt die Zeitzeile auf bekannte Weise die Auschaltung der HN-Strassenbeleuchtung, wenn eine vorgegebene, in der Zeitzeile gespeicherte Ausführungs-Uhrzeit erreicht wird.

Gemäss Fig. 5 empfängt der Rundsteuerempfänger um 04.45 h sehr früh am nächsten Morgen ein Rundsteuer-Telegramm, welches in der Rundsteuer-Zentrale wieder durch dessen Uhr 1 ausgelöst wurde. Das Ausführungs-Doppelkommando DK8 besitzt wieder einen Wert "00", da die GN-Strassenbeleuchtung um 04.45 h nicht geändert werden muss (siehe Fig. 2). Das Ausführungs-Doppelkommando DK9 besitzt diesmal einen Wert "10", was bedeutet, dass die HN-Strassenbeleuchtung wieder einzuschalten ist (siehe Fig. 3). Das DK9 ruft als Interpreter-Programm wieder das Programm 2 auf, welches veranlasst, dass das Ausgangsrelais K2 und damit die HN-Strassenbeleuchtung eingeschaltet wird, was in der Fig. 4 symbolisch durch eine wieder leuchtende Lampe HN dargestellt ist. Das Doppelkommando DK10 besitz wieder den Wert "00" und veranlasst aus dem gleich Grund wie in der Fig. 4 keinen Aufruf des Programms 3 und damit keine Speicherung des Interpreter-Befehls "Remember [., .]". Bei Nichtempfang des Rundsteuer-Telgramms am nächsten Tag übernimmt wieder eine Zeitzeile diesmal eine Einschaltung der HN-Strassenbeleuchtung.

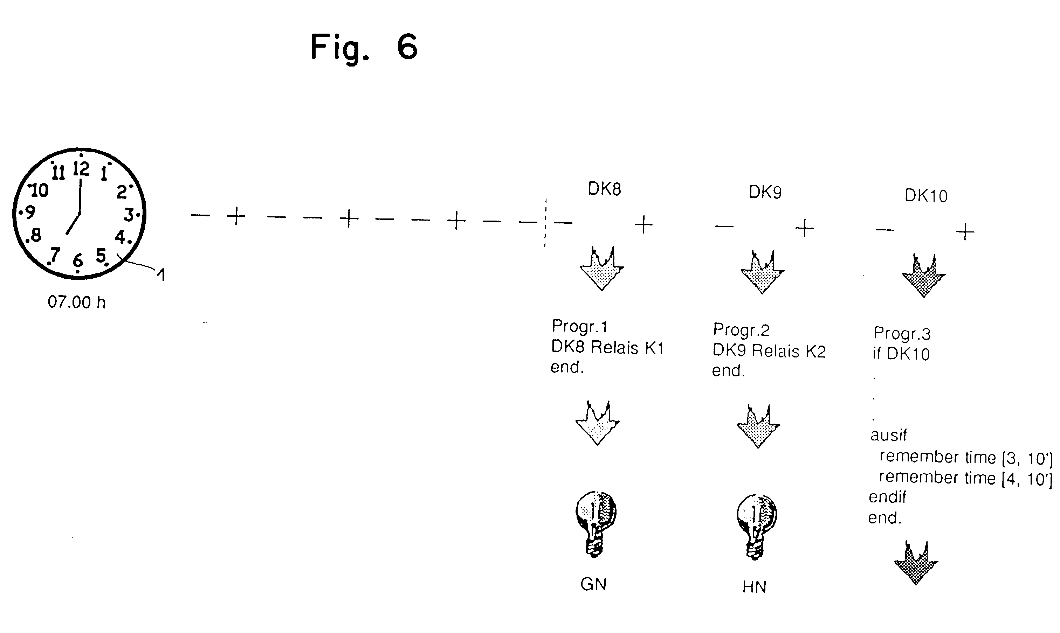

Gemäss Fig. 6 empfängt ein Rundsteuerempfänger später am Morgen um 00.70 h ein Rundsteuer-Telegramm, welches in der Rundsteuer-Zentrale durch den Dämerungsschalter ausgelöst wurde. Die beiden Ausführungs-Doppelkommandos DK8 und DK9 besitzen beide jetzt einen Wert "01", was bedeutet, dass sowohl die GN- als auch die HN-Strassenbeleuchtung auszuschalten ist (siehe Fig. 2 und Fig. 3). Das DK8 ruft als Interpreter-Programm das Programm 1 auf, welches veranlasst, dass das Ausgangsrelais K1 und damit die GN-Strassenbeleuchtung ausgeschaltet werden. Das DK9 veranlasst auf gleiche Weise mit Hilfe des Programms 2 und des Ausgangsrelais K2, dass die HN-Strassenbeleuchtung ausgeschaltet wird. Dies ist in der Fig. 6 durch nichtleuchtende Lampen GN und HN symbolisch dargestellt. Das Doppelkommando DK10, welches ebenfalls den Wert "01" besitzt, ruft als Interpreter-Programm das Programm 3 auf, welches z. B. folgenden Inhalt besitzt:

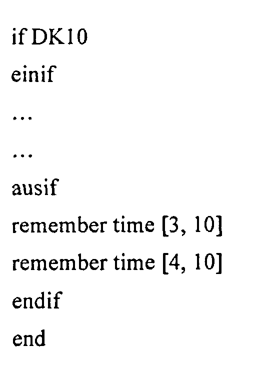

D.h.: Wenn das DK10 die Bedeutung "AUS" besitzt, d. h. gleich "01" ist, wird in die Memozeilen Nr. 3 und Nr. 4 die Summe 07.00 h + 0.10 h = 07.10 h als Ausführungs-Uhrzeit gespeichert. Diese Memozeilen enthalten dann unter anderem folgende Angaben:
- Memozeile Nr.3:: ...; 07.10 h; Programm 1, "AUS"; ...,
- Memozeile Nr.4:: ...; 07.10 h; Programm 2, "AUS"; ...,
was zur Folge hat, dass, wenn die Uhrzeit des Rundsteuer-Empfängers etwas später am Morgen die Ausführungs-Uhrzeit 07.10 h erreicht, die Programme 1 und 2 wieder als Interpreter-Programme aufgerufen und damit der in den Ausführungs-Doppelkommandos DK8 und DK9 enthaltene Befehl "AUS" wiederholt, d. h. bestätigt wird, was keinen Einfluss auf die bereits nicht mehr leuchtende GN- und HN-Strassenbeleuchtung hat. Sollte jedoch am anderen Tag aus irgend einem Grund, z. B. weil die Rundsteuer-Anlage defekt ist, zur Dämmerungszeit gegen 07.00 h kein Rundsteuer-Telegramm empfangen werden, erinnert sich der Rundsteuer-Empfänger, dass er beim Erreichen der Ausführungs-Uhrzeit 07.10 h den Befehl "AUS", der in den am Vortage empfangenen Ausführungs-Doppelkommandos DK8 und DK9 enthalten war, ausführen muss. Er schaltet somit um 10 Minuten leicht verspätet die GN- und HN-Strassenbeleuchtung aus, da diese wegen dem fehlenden Rundsteuer-Telegramm noch eingeschaltet ist.

In der Praxis ist es am sinnvollsten, die GN- und HN-Strassenbeleuchtung jeweils nur mit ihrem eigenen Doppelkommando DK8 bzw. DK9 zu schalten. Falls es aber aus Platzgründen erforderlich ist, können beide Beleuchtungsarten auch zusammen durch ein einziges Doppelkommando, z. B. DK8 geschaltet werden. Dies hat den Vorteil, dass nur eine einzige Memozeile für die Ein- und nur eine einzige Memozeile für die Ausschaltung benötigt wird.

Bei jeder Sendewiederholung wird ohne Gegenmassnahmen die Ausführungs-Uhrzeit neu in die Memozeile eingetragen. Um dies zu vermeiden, darf das Kommando DK10 bei den Sendewiederholungen nicht gesendet werden oder es muss mit gegenseitigen Verriegelungen gearbeitet werden. Die Steuerung der letzteren erfolgt in demjenigen Interpreter-Programm, welches durch das Kommando DK10 aufgerufen wird, also im Programm 3. Vorzugsweise ist bei einer Sendewiederholung eines das Kommando DK10 aufweisenden Rundsteuer-Telegramms das weitere Kommando DK10 Null.

Bei einer Testsendung eines Rundsteuer-Telegramms ist das Kommando DK10 Null. Da Testsendungen normale Rundsteuer-Telegramme beinhalten, deren DK10 den Wert "00" besitzen, erfolgt bei Ihnen, trotz variabler Sendezeiten, keine gesteuerte Gedächtnisfunktion in den Rundsteuer-Empfängern, da das Programm 3 als Interpreter-Programm nur durch einen Wert des DK's 10 aufgerufen wird, der unterschiedlich von Null ist. Ausgelöste Testsendungen werden somit nur einmal ausgeführt und die Ausführung später, z. B. nach 24 h, nicht wiederholt.

## Patentansprüche

1. Verfahren zur Steuerung elektrischer Lasten, bei dem ein zu Rundsteuer-Empfängern gesandtes Rundsteuer-Telegramm ein Ausführungs-Kommando (DK8 bzw. DK9) enthält, welches auf ein zugehöriges Ausgangsrelais (K1 bzw. K2) der Rundsteuer-Empfänger wirksam ist, welches seinerseits zwecks Ausführung einer vorgegebenen Funktion auf eine zugehörige Gruppe (G1 bzw. G2) der zu steuernden elektrischen Lasten wirksam ist,
dadurch gekennzeichnet,
- dass im Rundsteuer-Telegramm noch ein zum Ausführungs-Kommando (DK8, DK9) gehörendes weiteres Kommando (DK10) vorhanden ist,
- bei dessen Empfang im Rundsteuer-Empfänger eine Ausführungs-Uhrzeit gespeichert wird,
- die eine Funktion der momentanen Uhrzeit ist, und
- dass bei einem zukünftigen Erreichen der gespeicherten Ausführungs-Uhrzeit
- die zum Ausführungs-Kommando (DK8, DK9) gehörende Funktion ausgeführt wird, falls inzwischen nicht zu einer anderen Uhrzeit erneut das weitere Kommando (DK10) mit dem Ausführungs-Kommando (DK8, DK9) empfangen wurde.

2. Verfahren nach Anspruch 1, dadurch gekennzeichnet, dass die gespeicherte Ausführungs-Uhrzeit die mit einem positiven oder negativen Versatz versehene momentane Uhrzeit ist.

3. Verfahren nach Anspruch 1, dadurch gekennzeichnet, dass die gespeicherte Ausführungs-Uhrzeit die momentane Uhrzeit ist.

4. Verfahren nach einem der Ansprüche 1 bis 3, dadurch gekennzeichnet, dass die beim Erreichen der gespeicherten Ausführungs-Uhrzeit auszuführende Funktion sperrbar ist durch Sendung eines weiteren Rundsteuer-Telegramms, welches ein entsprechendes Sperr-Kommando enthält.

5. Verfahren nach einem der Ansprüche 1 bis 4, dadurch gekennzeichnet, dass die Kommandos (DK8, DK9, DK10) Doppelkommandos sind, die aus zwei zeitlich aufeinanderfolgenden Bits des Rundsteuer-Telegramms bestehen, wobei eines der beiden Bits des Doppelkommandos jeweils entweder einen Einschalt-Befehl (EIN) oder einen Ausschalt-Befehl (AUS) beinhaltet und wobei das Ausführungs-Doppelkommando (DK8, DK9) jeweils den Einschalt-Befehl (EIN) bzw. den Ausschalt-Befehl (AUS) für das zum Ausführungs-Doppelkommando gehörende Ausgangsrelais (K1 bzw. K2) beinhaltet.

6. Verfahren nach einem der Ansprüche 1 bis 4, dadurch gekennzeichnet, dass die Kommandos Einzelkommandos sind.

7. Verfahren nach einem der Ansprüche 1 bis 4, dadurch gekennzeichnet, dass die Kommandos Decabit-Kommandos sind.

8. Verfahren nach einem der Ansprüche 1 bis 7, dadurch gekennzeichnet, dass die auszuführende Funktion ein Ein- oder Ausschalten der zu steuernden elektrischen Lasten ist.

9. Verfahren nach einem der Ansprüche 1 bis 8, dadurch gekennzeichnet, dass die elektrischen Lasten die Lampen einer öffentlichen Strassenbeleuchtung sind.

10. Verfahren nach einem der Ansprüche 1 bis 9, dadurch gekennzeichnet, dass in den Rundsteuer-Empfängern jeweils ein mit einem Speicher versehener Mikrocomputer vorhanden ist und dass die Ausführungs-Uhrzeit in einer mittels eines Interpreter-Programms gewählten Zeile des Speichers gespeichert wird.

11. Verfahren nach Anspruch 10, dadurch gekennzeichnet, dass, zur Verhinderung eines Aufrufs des Interpreter-Programms bei einer erstmaligen Koinzidenz der Uhrzeit mit der Ausführungs-Uhrzeit, bei einer Eintragung der Ausführungs-Uhrzeit in die Zeile des Speichers dort eine Sperre gesetzt wird, welche nach der erstmaligen Koinzidenz gelöscht wird, so dass die Sperre dann für weitere Koinzidenzen ausser Betrieb ist.

12. Verfahren nach einem der Ansprüche 1 bis 11, dadurch gekennzeichnet, dass bei einer Sendewiederholung eines das weitere Kommando (DK10) aufweisenden Rundsteuer-Telegramms das weitere Kommando (DK10) Null ist.

13. Verfahren nach einem der Ansprüche 1 bis 12, dadurch gekennzeichnet, dass bei einer Testsendung eines Rundsteuer-Telegramms das weitere Kommando (DK10) Null ist.

## Claims

1. A method of controlling electric loads, wherein a ripple control telegram which is transmitted to ripple control receivers contains an execute command (DK8 and DK9 respectively) which is operative on an associated output relay (K1 and K2 respectively) of the ripple control receivers, which in turn for execution of a predetermined function is operative on an associated group (G1 and G2 respectively) of the electric loads to be controlled,
characterised in that
- a further command (DK10) belonging to the execute command (DK8, DK9) is also present in the ripple control telegram,
- upon the receipt thereof in the ripple control receiver an execute clock time is stored
- which is a function of the instantaneous clock time, and
- when the stored execute clock time is reached in the future
- the function belonging to the execute command (DK8, DK9) is executed if in the meantime the further command (DK10) was not received again at another clock time with the execute command (DK8, DK9).

2. A method according to claim 1 characterised in that the stored execute clock time is the instantaneous clock time provided with a positive or negative shift.

3. A method according to claim 1 characterised in that the stored execute clock time is the instantaneous clock time.

4. A method according to one of claims 1 to 3 characterised in that the function which is to be executed when the stored execute clock time is reached can be blocked by transmission of a further ripple control telegram which contains a corresponding blocking command.

5. A method according to one of claims 1 to 4 characterised in that the commands (DK8, DK9, DK10) are double commands which comprise two bits which occur in time succession of the ripple control telegram, wherein one of the two bits of the double command respectively contains either a switch-on order (ON) or a switch-off order (OFF) and wherein the execute double command (DK8, DK9) respectively contains the switch-on order (ON) and the switch-off order (OFF) respectively for the output relay (K1 and K2 respectively) belonging to the execute double command.

6. A method according to one of claims 1 to 4 characterised in that the commands are single commands.

7. A method according to one of claims 1 to 4 characterised in that the commands are decabit commands.

8. A method according to one of claims 1 to 7 characterised in that the function to be executed is switching the electric loads to be controlled on or off.

9. A method according to one of claims 1 to 8 characterised in that the electric loads are the lamps of a public street lighting system.

10. A method according to one of claims 1 to 9 characterised in that provided in the ripple control receivers is a respective microcomputer provided with a memory and that the execute clock time is stored in a line of the memory, which is selected by means of an interpreter program.

11. A method according to claim 10 characterised in that to prevent the interpreter program from being called up when the clock time is coincident for the first time with the execute clock time, when the execute clock time is registered in the line of the memory a block is set there, which is disabled after the first coincidence, so that the block is then out of operation for further coincidences.

12. A method according to one of claims 1 to 11 characterised in that, upon transmission repetition of a ripple control telegram having the further command (DK10) the further command (DK10) is zero.

13. A method according to one of claims 1 to 12 characterised in that in a test transmission of a ripple control telegram the further command (DK10) is zero.

## Revendications

1. Procédé de commande de charges électriques, dans le cas duquel un télégramme d'instructions multidestinataires envoyé à des récepteurs d'instructions multidestinataires contient une instruction d'exécution (DK8 ou DK9) qui intervient sur un relais de sortie correspondant (K1 ou K2) des récepteurs d'instructions multidestinataires qui, de son côté, aux fins d'exécution d'une fonction prescrite, intervient sur un groupe correspondant (G1 ou G2) des charges électriques à commander,
caractérisé par le fait
- que dans le télégramme d'instructions multidestinataires il y a encore une autre instruction (DK10) qui est nécessaire à l'instruction d'exécution. (DK8, DK9),
- et lors de la réception de laquelle est mémorisée dans le récepteur d'instructions multidestinataires une heure d'exécution
- qui est fonction de l'heure actuelle et
- que lorsqu'arrive ensuite l'heure d'exécution mémorisée
- la fonction nécessaire pour la fonction d'exécution (DK8, DK9) est exécutée dans le cas où, entre temps, à une autre heure, l'autre instruction (DK10) n'a pas été à nouveau reçue avec l'instruction d'exécution (DK8, DK9).

2. Procédé selon la revendication 1, caractérisé par le fait que l'heure d'exécution mémorisée est l'heure actuelle avec un décalage positif ou négatif.

3. Procédé selon la revendication 1, caractérisé par le fait que l'heure d'exécution mémorisée est l'heure actuelle.

4. Procédé selon l'une des revendications 1 à 3, caractérisé par le fait que la fonction à exécuter lorsqu'arrive l'heure d'exécution mémorisée peut être interdite par envoi d'un autre télégramme d'instructions multidestinataires contenant une instruction d'interdiction correspondante.

5. Procédé selon l'une des revendications 1 à 4, caractérisé par le fait que les instructions (DK8, DK9, DK10) sont des instructions doubles qui sont constituées de deux binaires, se succédant dans le temps, du télégramme d'instructions multidestinataires, l'un des deux binaires de l'instruction double contenant chaque fois soit un ordre de mise en circuit (EIN) soit un ordre de mise hors circuit (AUS) et l'instruction double d'exécution (DK8, DK9) contenant chaque fois l'instruction de mise en circuit(EIN) ou l'instruction de mise hors circuit (AUS) pour le relais de sortie (K1 ou K2) nécessaire pour l'instruction double d'exécution.

6. Procédé selon l'une des revendications 1 à 4, caractérisé par le fait que les instructions sont des instructions simples.

7. Procédé selon l'une des revendications 1 à 4, caractérisé par le fait que les instructions sont des instructions de dix binaires.

8. Procédé selon l'une des revendications 1 à 7, caractérisé par le fait que la fonction à exécuter est une mise en circuit ou une mise hors circuit des charges électriques à commander.

9. Procédé selon l'une des revendications 1 à 8, caractérisé par le fait que les charges électriques sont les lampes d'un éclairage public des rues.

10. Procédé selon l'une des revendications 1 à 9, caractérisé par le fait que dans les récepteurs d'instructions multidestinataires ii y a chaque fois un micro-ordinateur comportant une mémoire et que l'heure d'exécution est mémorisée sur une ligne de la mémoire choisie au moyen d'un programme interpréteur.

11. Procédé selon la revendication 10, caractérisé par le fait que pour interdire un appel du programme interpréteur lors d'une première coïncidence de l'heure avec l'heure d'exécution, lors de l'entrée de l'heure d'exécution sur la ligne de la mémoire, y est définie une interdiction qui s'efface après la première coïncidence de sorte que l'interdiction est alors éliminée pour d'autres coïncidences.

12. Procédé selon l'une des revendications 1 à 11, caractérisé par le fait que dans le cas d'une répétition de l'émission d'un télégramme d'instructions multidestinataires présentant l'autre instruction (DK10), cette autre instruction (DK10) prend la valeur zéro.

13. Procédé selon l'une des revendications 1 à 12, caractérisé par le fait que dans le cas d'une émission test d'un télégramme d'instructions multidestinataires l'autre instruction (DK10) prend la valeur zéro.
